# EUROPEAN PATENT APPLICATION

(11) **EP 1 146 506 A2**
(43) Date of publication of application: **17.10.2001**
(21) Application number: 01303164.6
(22) Date of filing: 03.04.2001
(51) Int. Cl.: G11B 5/008, G11B 5/09

(54) **Recording, playback, recording medium and recording format**

(30) Priority: 14.04.2000 JP 2000112871
(71) Applicant: SONY CORPORATION, Tokyo 141 (JP)
(72) Inventor: Hayakawa, Tomoo, Shinagawa-ku, Tokyo (JP); Enomoto, Takuro, Shinagawa-ku, Tokyo (JP); Yoshihiro, Toshitaka, Shinagawa-ku, Tokyo (JP); Abe, Fumiyoshi, Shinagawa-ku, Tokyo (JP)
(74) Representative: Pratt, Richard Wilson

(57) **Abstract**

In order to freely control the ratio of video data to search data so as to record them, an MPEG video encoder codes an input video picture in order to create video data. A search-data creation circuit creates search data based on the video data and adds a macro block address (MBA) to the search data.

## Description

### BACKGROUND OF THE INVENTION

### 1. Field of the Invention

The present invention relates to recording, playback, recording medium and recording format.

Embodiments of the present invention relate to a magnetic tape recording apparatus and method, a magnetic tape playback apparatus and method, a format of a magnetic tape, and a recording medium. More particularly, embodiments of the present invention relate to a magnetic tape recording apparatus and method and a magnetic tape playback apparatus and method which record a video picture in a magnetic tape or which play back a video picture recorded in a magnetic tape, a format of the magnetic tape, and a recording medium used therewith.

### 2. Description of the Related Art

In recent years, an inter-frame image compression technique, such as MPEG (Moving Picture Experts Group), has been used to record video information in a tape. In playback (what is commonly called "searching") other than at normal speed (what is commonly called a 1x speed) (hereinafter referred to as a "normal playback"), the scanning trace of a head has an inclination angle with respect to tracks recorded in the tape, and a playback apparatus cannot play back all the data recorded in the tape. Furthermore, since the information of another frame is used, it is not possible to play back a video picture by using only the data positioned in the scanning trace of the head.

Accordingly, a technique has been conceived for scanning a tape so that a recording apparatus can record a video picture having a low resolution (a high compression ratio) used during searching at a predetermined position in the tape, and a playback apparatus can read the low resolution video picture during searching.

For example, in Japanese Unexamined Patent Application Publication No. 11-355708, there are disclosed a system in which map information indicating that six types of search data are recorded in predetermined specific regions of a tape, and information for identifying which one of the search data and the normal-playback data has been recorded in these specific regions are contained, and a system in which the amount of search data is reduced when the data rate of the normal-playback data is high.

However, the conventional recording apparatus or playback apparatus has problems described below. Even if the conventional recording apparatus or playback apparatus can adjust the data rate of the search data in such a manner as to correspond to the data rate of the normal-playback data, it cannot control the data rate of the normal-playback data and the data rate of the search data, and it is not possible to record or play back the video picture by selecting one of: increasing the number of frames of a picture to be displayed during searching at higher speed; increasing the number of frames of a picture to be displayed during searching at lower speed; and increasing the bit rate of the normal-playback data in order to improve the image quality during normal playback.

An MPEG encoder cannot control the amount of information on the basis of the amount of data of the search data to be recorded.

### SUMMARY OF THE INVENTION

An embodiment of the present invention seeks to be capable of freely controlling the ratio of the video data to the search data so that these are recorded, and to be capable of using the search data and the video data, the ratio of which is controlled.

According to one aspect of the present invention, there is provided a magnetic tape recording apparatus for recording digital data in tracks of a magnetic tape by a rotary head, the magnetic tape recording apparatus comprising: video data creation means for coding an input video picture in order to create video data; search data creation means for creating search data on the basis of the video data; and formatting means for performing formatting so that the video data and the search data are stored in the tracks of the magnetic tape, wherein the formatting means places a predetermined number of sync blocks in one of the tracks, places, in one of the sync blocks, a detection pattern for detecting a sync block, identification information for identifying the sync block, main data, and an error-correcting intra code for the identification information and the main data, and places the address corresponding to the stored search data on the display picture, in the main data of the sync block when the sync block stores the search data.

The magnetic tape recording apparatus may further comprise bit rate control means for controlling the bit rate of the video data output by the video data creation means.

The magnetic tape recording apparatus may further comprise bit rate control means for controlling the bit rate of the search data output by the search data creation means.

The magnetic tape recording apparatus may further comprise signal generation means for generating a signal for indicating the position at which the search data is stored in the track of the magnetic tape, wherein the formatting means performs formatting so that the search data is stored at the position of the track of the magnetic tape, which corresponds to the signal.

According to another aspect of the present invention, there is provided a magnetic tape recording method comprising the steps of: coding an input video picture in order to create video data; creating search data on the basis of the video data; and performing formatting so that the video data and the search data are stored in the tracks of the magnetic tape, wherein the process of the formatting step places a predetermined number of sync blocks in one of the tracks, places, in one of the sync blocks, a detection pattern for detecting a sync block, identification information for identifying the sync block, main data, and an error-correcting intra code for the identification information and the main data, and places the address corresponding to the stored search data on the display picture, in the main data of the sync block when the sync block stores the search data.

According to another aspect of the present invention, there is provided a program in a recording medium, the program comprising: the steps of: coding an input video picture in order to create video data; creating search data on the basis of the video data; and performing formatting so that the video data and the search data are stored in the tracks of the magnetic tape, wherein the process of the formatting step places a predetermined number of sync blocks in one of the tracks, places, in one of the sync blocks, a detection pattern for detecting a sync block, identification information for identifying the sync block, main data, and an error-correcting intra code for the identification information and the main data, and places the address corresponding to the stored search data on the display picture, in the main data of the sync block when the sync block stores the search data.

According to another aspect of the present invention, there is provided a magnetic tape recording apparatus comprising: extraction means for extracting the address of search data on the display picture from the read digital data; combining means for performing combining by placing the search data at a predetermined position on the basis of the extracted address; and output means for outputting the search data combined by the combining means as one image.

According to another aspect of the present invention, there is provided a magnetic tape recording method comprising the steps of: extracting the address of search data on the display picture from the read digital data; performing combining by placing the search data at a predetermined position on the basis of the extracted address; and controlling the output so that the search data combined in the combining step is output as one image.

According to another aspect of the present invention, there is provided a program in a recording medium, the program comprising the steps of: extracting the address of search data on the display picture from the read digital data; performing combining by placing the search data at a predetermined position on the basis of the extracted address; and controlling the output so that the search data combined in the combining step is output as one image.

According to another aspect of the present invention, there is provided a format of a magnetic tape in which digital data is recorded in tracks by a rotary head, wherein in one of the tracks, a predetermined number of sync blocks is placed continuously; in one of the tracks, a detection pattern for detecting a sync block, identification information for identifying the sync block, main data, and an error-correcting intra code for the identification information and the main data are placed; and when the sync block stores the search data, the address corresponding to the search data on the display picture is placed in the main data of the sync block.

In the magnetic tape recording apparatus, the magnetic tape recording method, and the recording medium in accordance with embodiments of the present invention, an input video picture is coded to create video data, search data is created based on the video data, formatting is performed so that the video picture and the search data are stored in the tracks of a magnetic tape, a predetermined number of sync blocks is continuously placed in one track. In one sync block, a detection pattern for detecting a sync block, detection information for identifying the sync block, main data, and an error correcting code for the identification information and the main data are placed, and when the sync block stores the search data, the address corresponding to the stored search data on the display picture is placed in the main data of the sync block.

Furthermore, in the magnetic tape recording apparatus, the magnetic tape recording method, and the recording medium in accordance with embodiments of the present invention, the address of the search data on the display picture is extracted from the read digital data, the search data is combined as a result of being placed at a predetermined position on the basis of the extracted address, and the combined search data is output as one image.

In the format of the magnetic tape in accordance with an embodiment of the present invention, a predetermined number of sync blocks is placed in one track; in one sync block, a detection pattern for detecting a sync block, identification information for identifying the sync block, main data, and an error correcting code for the identification information and the main data are placed; and when the sync block stores the search data, the address, corresponding to the stored search data, on the display picture is placed in the main data of the sync block.

A better understanding of the invention will become apparent from the following illustrative description when read in conjunction with the accompanying drawings, in which:

### BRIEF DESCRIPTION OF THE DRAWINGS

Fig. 1 is a diagram showing the construction of an embodiment of a recording apparatus according to the present invention;
Fig. 2 is a diagram showing an example of the construction of predetermined function portions of a control circuit;
Fig. 3 shows the format of tracks of a magnetic tape;
Fig. 4 shows an example of the arrangement of the sectors of each track;
Fig. 5 shows the structure of a sync block of main data;
Fig. 6 shows the structure of an SB header;
Fig. 7 illustrates data indicating a search speed;
Fig. 8 illustrates a macro block;
Fig. 9 shows the relationship between search video data and the entire picture;
Fig. 10 shows an example of the arrangement of a sync block in which search video data recorded in the magnetic tape is stored;
Fig. 11 shows the relationship between the type of search video data recorded in the magnetic tape and the bit rate of a normal-playback video picture;
Fig. 12 is a flowchart illustrating a recording process of a recording apparatus;
Fig. 13 shows the construction of an embodiment of a playback apparatus according to the present invention; and
Fig. 14 is a flowchart illustrating a playback process of a playback apparatus.

### DESCRIPTION OF ILLUSTRATIVE EMBODIMENTS

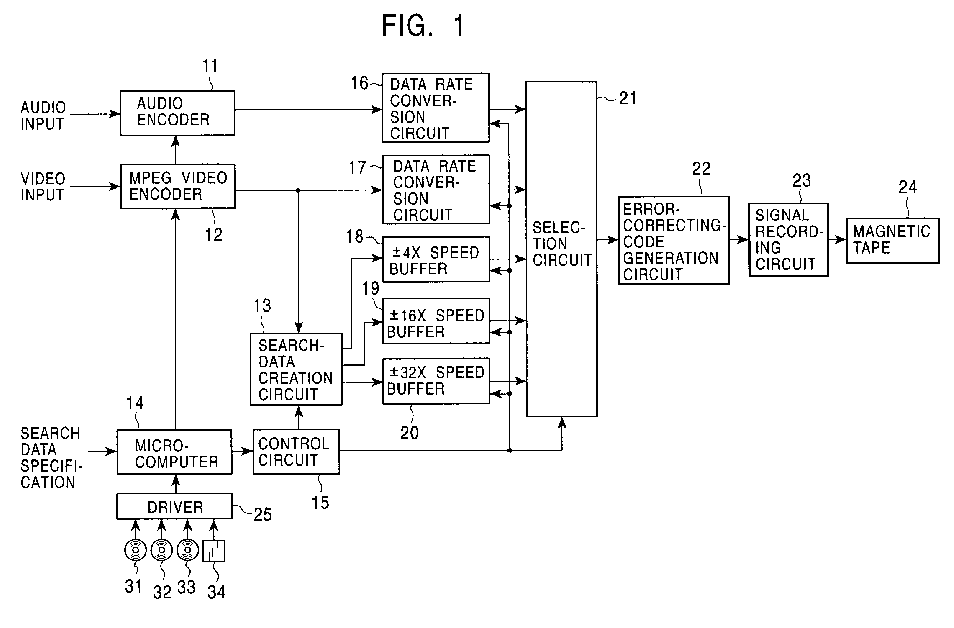

Fig. 1 is a diagram showing the construction of an embodiment of a recording apparatus according to the present invention, which codes an input high-quality video signal (hereinafter referred to as a "HD (High Definition) video signal") by the MP@H-1440 method of MPEG-2 and which records it in a magnetic tape by a helical scan method.

An audio encoder 11 codes an input baseband audio signal in order to create coded data (hereinafter referred to as "audio data"), which is a packetized elementary stream according to a method such as, for example, MPEG audio, and supplies it to a data rate conversion circuit 16.

An MPEG video encoder 12 codes an input, baseband HD video signal in order to create coded data (hereinafter referred to as "video data"), which is a packetized elementary stream of an MPEG method such as, for example, MP@HL or MP@H-1440, and supplies it to a search-data creation circuit 13 and a data rate conversion circuit 17.

For example, in the MP@H-1440 method of MPEG-2, the number of effective pixels of Y (luminance data) after decoding is 1440 horizontally and 1088 vertically with respect to the picture to be displayed. The MP@H-1440 method of MPEG-2 is a 4:2:0 component coding method.

When a predetermined signal is supplied to the search-data creation circuit 13 from a control circuit 15, the search-data creation circuit 13 creates search video data at 4x speed (in the forward direction and in the reverse direction) from the video data supplied from the MPEG video encoder 12, adds a macro block address (to be described later) to the created search video data at 4x speed, and supplies it to a ±4x speed buffer 18.

When another signal is supplied to the search-data creation circuit 13 from the control circuit 15, the search-data creation circuit 13 creates search video data at 4x speed (in the forward direction and in the reverse direction) and search video data at 16x speed (in the forward direction and in the reverse direction) from the video data supplied from the MPEG video encoder 12, adds a macro block address (to be described later) to the search video data at 4x speed and supplies it to the ±4x speed buffer 18, and adds a macro block address (to be described later) to the search video data at 16x speed and supplies it to a ±16x speed buffer 19.

Furthermore, when yet another signal is supplied to the search-data creation circuit 13 from the control circuit 15, the search-data creation circuit 13 creates, from video data supplied from the MPEG video encoder 12, search video data at 4x speed (in the forward direction and in the reverse direction), search video data at 16x speed (in the forward direction and in the reverse direction), and search video data at 32x speed (in the forward direction and in the reverse direction), adds a macro block address (to be described later) to the search video data at 4x speed and supplies it to the ±4x speed buffer 18, adds a macro block address (to be described later) to the search video data at 16x speed and supplies it to the ±16x speed buffer 19, and adds a macro block address (to be described later) to the search video data at 32x speed and supplies it to a ±32x speed buffer 20.

For example, the search-data creation circuit 13 extracts, from the DC components of a DCT (Discrete Cosine Transform) block of an I picture contained in the video data supplied from the MPEG video encoder 12, the six high-order bits thereof for Y (luminance data) and the five high-order bits thereof for C (color data), and considers them as video data.

A microcomputer 14 executes a prestored program or a program stored in a magnetic disk 31, an optical disk 32, a magneto-optical disk 33, or a semiconductor memory 34, which program is supplied from a driver 25, and controls the MPEG video encoder 12 on the basis of the input data of the search data specification so that the bit rate of the coded data output by the MPEG video encoder 12 becomes a predetermined value and data corresponding to the data of the search data specification is supplied to the control circuit 15.

The control circuit 15 controls the search-data creation circuit 13 on the basis of the data supplied from the microcomputer 14, so that the search-data creation circuit 13 creates predetermined search video data. Also, the control circuit 15 controls the data output timing of each of the data rate conversion circuit 16, the data rate conversion circuit 17, the ±4x speed buffer 18, the ±16x speed buffer 19, and the ±32x speed buffer 20.

Furthermore, the control circuit 15 causes a selection circuit 21 to select audio data, video data, or search video data, output from one of the data rate conversion circuit 16, the data rate conversion circuit 17, the ±4x speed buffer 18, the ±16x speed buffer 19, and the ±32x speed buffer 20, and to output the data.

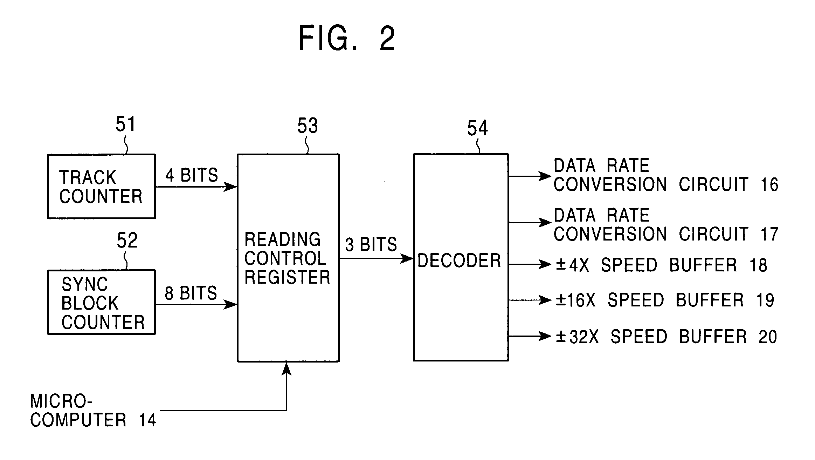

Fig. 2 shows an example of the construction of portions of the control circuit 15 which controls the data rate conversion circuit 16, the data rate conversion circuit 17, the ±4x speed buffer 18, the ±16x speed buffer 19, and the ±32x speed buffer 20. A track counter 51 is a 4-bit counter for holding a count value indicating which one of the 16 tracks within one interleave is recorded, and supplies the count value to a reading control register 53.

A sync block counter 52 is an 8-bit counter for holding a count value indicating which one of the 139 sync blocks within one track is recorded, and supplies the count value to the reading control register 53.

Based on the data supplied from the microcomputer 14, the count value supplied from the track counter 51, and the count value supplied from the sync block counter 52, the reading control register 53 creates 3-bit data indicating which one of the data rate conversion circuit 16, the data rate conversion circuit 17, the ±4x speed buffer 18, the ±16x speed buffer 19, and the ±32x speed buffer 20 should output and supplies it to a decoder 54.

The decoder 54, based on the 3-bit data supplied from the reading control register 53, supplies a signal indicating output timing to the data rate conversion circuit 16, supplies a signal indicating output timing to the data rate conversion circuit 17, supplies a signal indicating output timing to the ±4x speed buffer 18, supplies a signal indicating output timing to the ±16x speed buffer 19, and supplies a signal indicating output timing to the ±32x speed buffer 20.

One of the data rate conversion circuit 16, the data rate conversion circuit 17, the ±4x speed buffer 18, the ±16x speed buffer 19, and the ±32x speed buffer 20 outputs one of audio data, video data, and search video data on the basis of the signal supplied from the decoder 54, which corresponds to one of the 16 tracks, which is recorded, within one interleave and one of the 139 sync blocks, which is recorded, within one track. The data rate conversion circuit 16, the data rate conversion circuit 17, the ±4x speed buffer 18, the ±16x speed buffer 19, and the ±32x speed buffer 20 do not output data at the same time.

Referring back to Fig. 1, the data rate conversion circuit 16 is formed of an FIFO (First In First Out) buffer, etc., temporarily stores audio data supplied from the audio encoder 11, and outputs the stored audio data to the selection circuit 21 in synchronization with the signal indicating the output timing, which signal is supplied from the control circuit 15.

The data rate conversion circuit 17 is formed of an FIFO buffer, etc., temporarily stores the video data supplied from the MPEG video encoder 12, and outputs the stored video data to the selection circuit 21 in synchronization with the signal indicating the output timing, which signal is supplied from the control circuit 15.

The ±4x speed buffer 18 has a frame memory, temporarily stores, in the frame memory, the search video data at 4x speed (in the forward direction and in the reverse direction), supplied from the search-data creation circuit 13, to which a macro block address is added, and outputs the stored search video data to the selection circuit 21 in synchronization with the signal indicating the output timing, which signal is supplied from the control circuit 15.

The ±16x speed buffer 19 has a frame memory, temporarily stores, in the frame memory, the search video data at 16x speed (in the forward direction and in the reverse direction), supplied from the search-data creation circuit 13, to which a macro block address is added, and outputs the stored search video data to the selection circuit 21 in synchronization with the signal indicating the output timing, which signal is supplied from the control circuit 15.

The ±32x speed buffer 20 has a frame memory, temporarily stores, in the frame memory, the search video data at 32x speed (in the forward direction and in the reverse direction), supplied from the search-data creation circuit 13, to which a macro block address is added, and outputs the stored search video data to the selection circuit 21 in synchronization with the signal indicating the output timing, which signal is supplied from the control circuit 15.

The ±4x speed buffer 18, the ±16x speed buffer 19, and the ±32x speed buffer 20 may add a macro block address to the search video data.

Based on the signal indicating the output timing, which signal is supplied from the control circuit 15, the selection circuit 21 selects data output from one of the data rate conversion circuit 16, the data rate conversion circuit 17, the ±4x speed buffer 18, the ±16x speed buffer 19, and the ±32x speed buffer 20, and supplies it to an error-correcting-code generation circuit 22.

The error-correcting-code generation circuit 22 adds an error correcting code to the audio data, the video data, or the search video data, supplied from the selection circuit 21, and supplies it to a signal recording circuit 23.

The signal recording circuit 23 is formed of, for example, a rotary head, etc., and records the data supplied from the error-correcting-code generation circuit 22 into a magnetic tape 24.

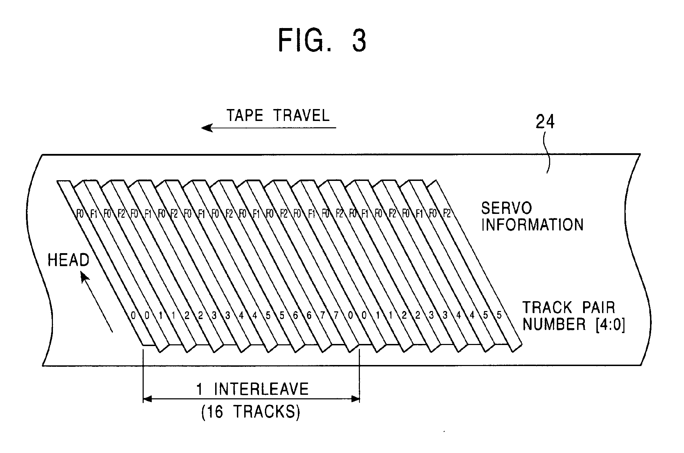

Fig. 3 shows the format of tracks formed in a magnetic tape 24 by a recording apparatus according to an embodiment of the present invention. A rotary head (not shown) traces over the magnetic tape 24 from the lower right to the upper left in the figure, thereby forming tracks inclined with respect to the longitudinal direction of the magnetic tape 24. In the figure, the magnetic tape 24 is moved from the right to the left.

A track pair number is set in each track. The track pair number is a number given to two tracks scanned by two heads having a positive azimuth and a negative azimuth, which are a track pair. In the example of Fig. 3, track pair numbers from 0 to 31 are given, and in the start track pair of 16 tracks to be interleaved, a track pair number 0, 8, or 16 is set (the track pairs in which number 8 or 16 is set are not shown).

The track pitch and the tape speed are the same as those in a DV (Digital Video) format.

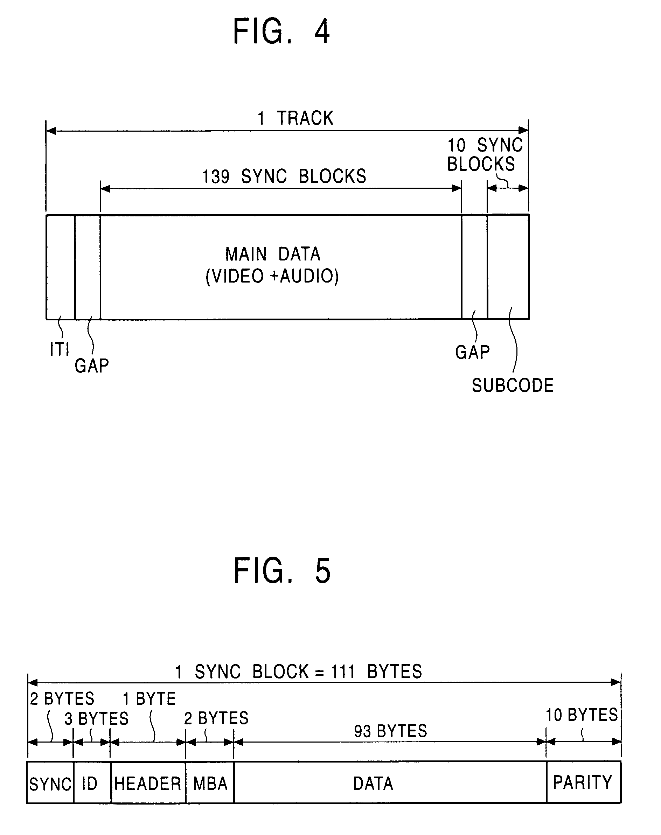

Fig. 4 shows an example of the arrangement of the sectors of each track. The "length of one track" is a length corresponding to a winding angle of 174 degrees of the magnetic tape 24, and a 1250-bit overwrite margin (not shown) is formed after it. This overwrite margin is used to prevent unerased portions from remaining.

In Fig. 4, the rotary head traces over the tracks from the left to the right. An ITI sector of the same format as the ITI sector of the DV format is placed at the start thereof.

In the ITI sector, data for creating a clock, data indicating whether or not data of a DV format is recorded, data indicating one of the SP mode and the LP mode, data indicating whether or not it is a pilot frame, etc., are stored.

A gap of a predetermined length which follows the ITI sector is used for post-recording editing or insert editing. Following the gap, main data which is audio data or video data is placed. The main data is composed of 139 sync blocks.

Following the main data, a gap of a predetermined length is placed, and after the gap, a subcode is placed. The subcode is composed of 10 sync blocks. This subcode contains, for example, a track number, a time code number, etc., supplied from the control circuit 15, etc.

Fig. 5 shows the structure of a sync block of the main data when search video data is stored. The length of each sync block is set to be 111 bytes (888 bits).

When the search video data is stored, in the sync block, a 2-byte sync, a 3-byte ID, a 1-byte header, a 2-byte macro block address, 93-byte main data, and a 10-byte parity are stored from the start thereof.

When normal-playback video data or normal-playback audio data is stored, the sync block is set to be 111 bytes, and a 2-byte sync, a 3-byte ID, a 1-byte header, 95-byte main data, and a 10-byte parity are stored from the start thereof.

In the ID, data indicating the type of format of the track, a track pair number, a sync block number, etc., are stored.

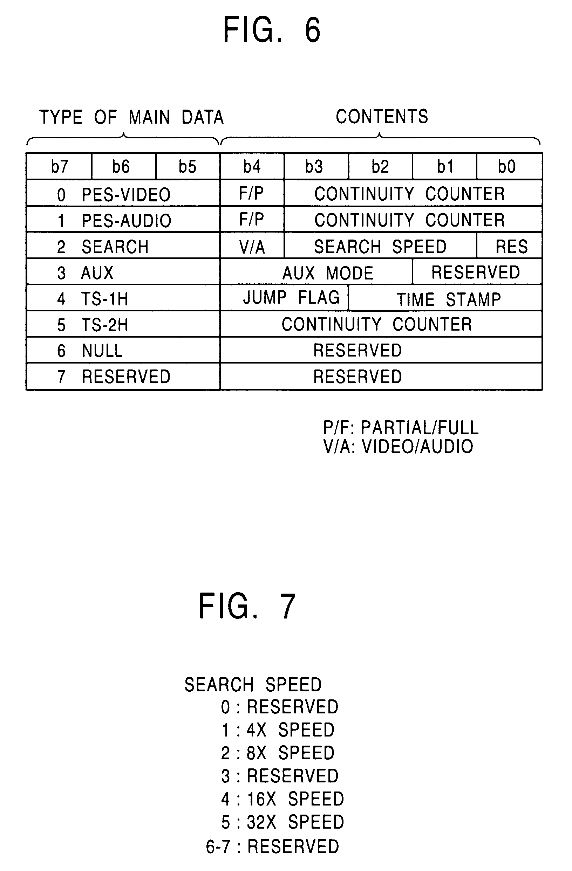

The SB header, as shown in Fig. 6, is composed of 8 bits of b7 to b0. Of bits b7 to b0, in bits b7 to b5, predetermined values indicating the type of main data (for example, data indicating audio data, video data, search video data, data of a transport stream, or AUX (auxiliary) data) are set, and in bits b4 to b0, predetermined values indicating the details of the main data are set.

The value 0 in bits b7 to b5 indicates that the main data is video data in compliance with the format of a program elementary stream (PES) according to MPEG-2, and the value 1 indicates that the main data is audio data in compliance with the format of PES (PES audio). In this case, of bits b4 to b0, in bit b4, data indicating whether the data (video data or audio data) is partial (less than 95 bytes) or full (95 bytes) is placed, and in bits b3 to b0, data indicating the count value is placed.

The value 2 in bits b7 to b5 indicates that the main data is search video data. In this case, of bits b4 to b0, in bit b4, data indicating whether the search video data is video data or audio data is placed. Also, in bits b3 to b1, data indicating a search speed is placed. For example, as shown in Fig. 7, the value 1 in bits b3 to b1 indicates a 4x speed, the value 2 indicates an 8x speed, the value 4 indicates a 16x speed, and the value 5 indicates a 32x speed. By causing the number of rotations of the rotary head (drum) to be adjustable in a subservient manner, a search in which an adjustable speed of each increased speed (speed corresponding to the number of rotations of the drum) is made extensive becomes possible.

Referring back to Fig. 6, the value 3 in bits b7 to b5 indicates that the main data is AUX (auxiliary) data.

Referring back to Fig. 6 again, the value 4 in bits b7 to b5 indicates that the main data is the first half of the data recorded in the form of a transport stream. In this case, in bits b4 and b3, a jump flag is placed, and in bits b2 to b0, a time stamp is placed. Also, the value 5 in bits b7 to b5 indicates that the main data is the second half of the data recorded in the form of a transport stream. In this case, the count value is placed in bits b4 to b0.

The value 6 in bits b7 to b5 indicates that no data has been recorded as the main data, that is, indicates a null. This null is inserted when the average total amount of main data is smaller than the recordable rate. For example, when the rate in the recording of a transport stream is 20 Mbps, a null for approximately 5 Mbps is inserted.

Referring back to Fig. 5, following the SB header, a 2-byte macro block address (hereinafter, also referred to as an "MBA") is stored in the sync block when the search video data is stored. The MBA is not placed in the sync block in which normal-playback video data or normal-playback audio data is stored.

The MBA shows the position at which the search video data stored by the sync block is placed on the picture.

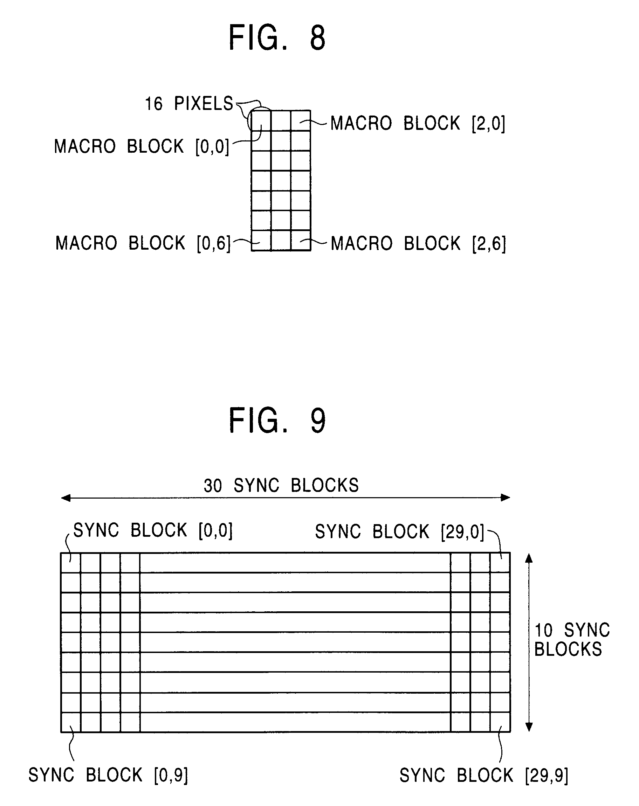

As shown in Fig. 8, one sync block stores 21 macro blocks (in such a manner as to be arranged as 3 horizontally and 7 vertically) in which 16 pixels are stored horizontally and 16 pixels are stored vertically.

The macro block contains 4 DCT blocks containing a total of 64 pixels: 8 pixels horizontally and 8 pixels vertically. Therefore, one macro block contains data of 6 bits x 4 as luminance data, contains data of 5 bits x 2 as color data, and thus contains data of a total of 34 bits.

Since the sync block contains 21 macro blocks, the sync block contains search video data of 714 bits, namely, 90 bytes.

In the MP@H-1440 method of MPEG-2, since the number of effective pixels of Y (luminance data) after decoding is 1440 horizontally and 1088 vertically with respect to the picture to be displayed, as shown in Fig. 9, the search video data corresponding to one picture is stored in 300 sync blocks, which are arranged as 30 horizontally and 10 vertically.

When the position of the macro block is specified in sync block units, the position of the macro block is indicated by the coordinates which are from 0 to 30 horizontally and from 0 to 10 vertically, the horizontal position can be represented by 5 bits and the vertical position can be represented by 4 bits, and thus can be represented by a 2-byte MBA.

Referring back to Fig. 5, following the MBA, a 93-byte region for storing the search video data (90 bytes) is placed in the sync block when the search video data is stored.

In the sync block, following the data, 10-byte parity data for error correction of the sync block is stored.

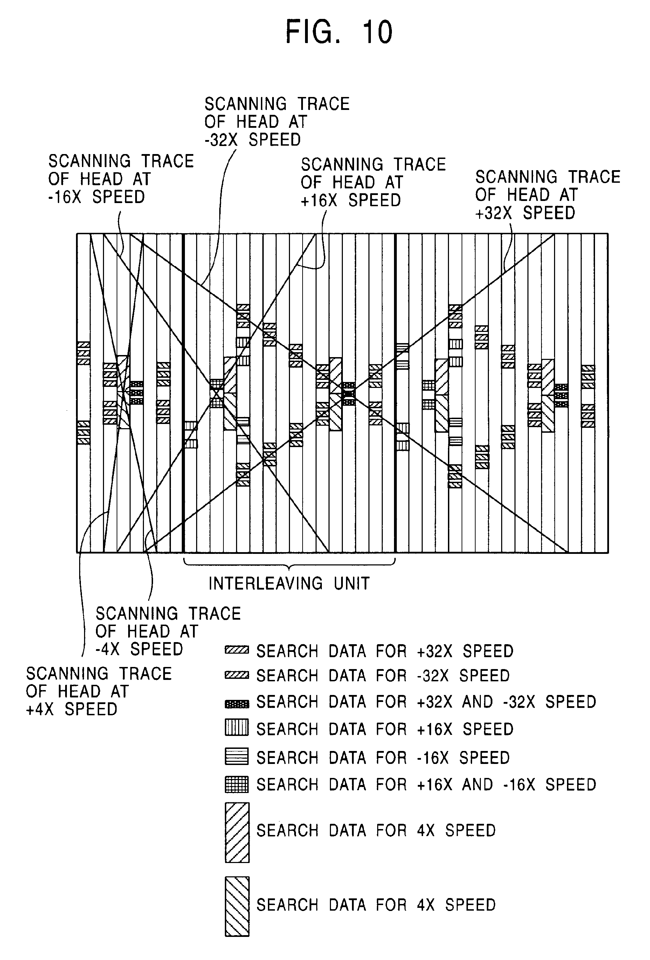

Fig. 10 shows an example of the arrangement of the sync block in which the search video data recorded in the magnetic tape 24 is stored. In Fig. 10, the direction in which scanning is performed during normal playback of tracks is assumed to be from top to bottom in the figure, and the tracks are shown in such a manner that adjacent pixel are arranged alongside.

The sync block containing search video data at 4x speed is placed following the position at which the scanning trace of the head at +4x speed and the scanning trace of the head at -4x speed intersect.

The sync block containing search video data used commonly for +16x speed and for -16x speed is placed at the position at which the scanning trace of the head at +16x speed and the scanning trace of the head at -16x speed intersect.

The sync block containing search video data at +16x speed is placed in the scanning trace of the head at +16x speed. The sync block containing search video data at -16x speed is placed in the scanning trace of the head at -16x speed.

The sync block containing search video data used commonly for +32x speed and for -32x speed is placed at the position at which the scanning trace of the head at +32x speed and the scanning trace of the head at -32x speed intersect.

The sync block containing search video data at +32x speed is placed in the scanning trace of the head at +32x speed. The sync block containing search video data at -32x speed is placed in the scanning trace of the head at -32x speed.

When the recording apparatus records only the search video data at 4x speed in the magnetic tape 24, only the sync block containing the search video data at 4x speed, shown in Fig. 10, is recorded in the magnetic tape 24, and the normal-playback video data or the normal-playback audio data is recorded instead of the search video data at 16x speed or the search video data at 32x speed of Fig. 10.

Furthermore, when the recording apparatus records search video data at 4x speed and search video data at 16x speed in the magnetic tape 24, only the sync block containing the search video data at 4x speed and the search video data at 16x speed, shown in Fig. 10, is recorded in the magnetic tape 24, and the normal-playback video data or the normal-playback audio data is recorded instead of the search video data at 32x speed of Fig. 10.

Since the sync block containing the search video data at 4x speed, the sync block containing the search video data at +16x or -16x speed, and the sync block containing the search video data at +32x or -32x speed each have an MBA stored therein, even if the position at which the video data is recorded is changed, the playback apparatus can play back the search video data stored in each sync block while maintaining the format compatibility by referring to the MBA.

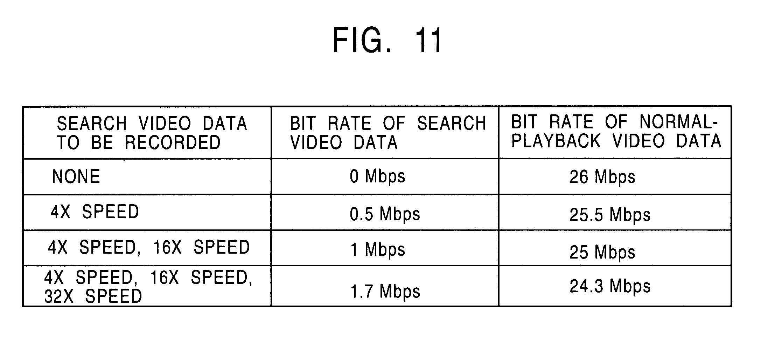

Fig. 11 shows the relationships between the type of search video data recorded in the magnetic tape 24 and the bit rate of normal-playback video data.

In a case where none of the search video data is recorded in the magnetic tape 24, the microcomputer 14 causes the MPEG video encoder 12 to set the bit rate of the normal-playback video data to 26 Mbps.

In a case where the search video data at 4x speed is recorded in the magnetic tape 24, the microcomputer 14 causes the MPEG video encoder 12 to set the bit rate of the normal-playback video data to 25.5 Mbps. The microcomputer 14 causes, via the control circuit 15, the search-data creation circuit 13 to create search video data at 4x speed having a bit rate of 0.5 Mbps.

In a case where the search video data at 4x speed and the search video data at 16x speed are recorded in the magnetic tape 24, the microcomputer 14 causes the MPEG video encoder 12 to set the bit rate of the normal-playback video data to 25 Mbps. The microcomputer 14 causes, via the control circuit 15, the search-data creation circuit 13 to create search video data at 4x speed having a bit rate of 0.5 Mbps and search video data at 16x speed having a bit rate of 0.5 Mbps.

In a case where the search video data at 4x speed, the search video data at 16x speed, and the search video data at 32x speed are recorded in the magnetic tape 24, the microcomputer 14 causes the MPEG video encoder 12 to set the bit rate of the normal-playback video data to 24.3 Mbps. The microcomputer 14 causes, via the control circuit 15, the search-data creation circuit 13 to create search video data at 4x speed having a bit rate of 0.5 Mbps, search video data at 16x speed having a bit rate of 0.5 Mbps, and search video data at 32x speed having a bit rate of 0.7 Mbps.

In the manner described above, the recording apparatus shown in Fig. 1 controls the bit rate of the normal-playback video data in such a manner as to correspond to the type and the number of pieces of the search video data to be recorded in the magnetic tape 24.

For example, if normal-playback video data and search video data at 4x speed are recorded in the magnetic tape 24, it is possible to play back a higher-quality image during normal playback in comparison with a case in which the search video data at 16x speed and the search video data at 32x speed are also recorded.

In the following description, descriptions about audio data are omitted where appropriate.

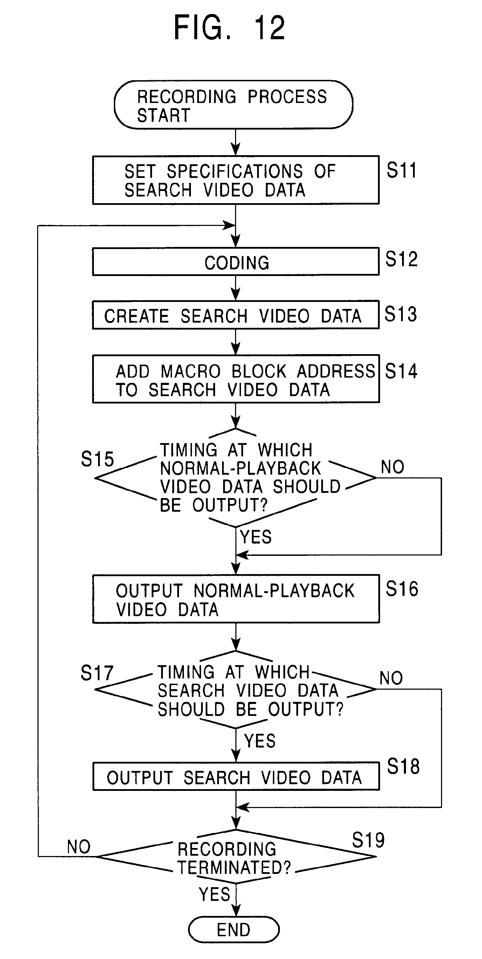

Fig. 12 is a flowchart illustrating a recording process of the recording apparatus.

In step S11, the microcomputer 14 of the recording apparatus sets the specifications of search video data, which indicate which one of the search video data at 4x speed, the search video data at 16x speed, and the search video data at 32x speed should be recorded in the magnetic tape 24. The microcomputer 14 supplies data corresponding to the setting to the MPEG video encoder 12 and the control circuit 15. The control circuit 15, based on the data received from the microcomputer 14, supplies a signal for specifying search video data to be created to the search-data creation circuit 13.

In step S12, in response to the data supplied from the microcomputer 14, the MPEG video encoder 12 codes an input video signal at a predetermined bit rate in order to create normal-playback video data. The MPEG video encoder 12 supplies the created normal-playback video data to the data rate conversion circuit 17 and the search-data creation circuit 13.

In step S13, in response to a signal supplied from the control circuit 15, the search-data creation circuit 13 creates predetermined search video data from the normal-playback video data supplied from the MPEG video encoder 12.

In step S14, the search-data creation circuit 13 adds a macro block address to the search video data created in the process of step S13.

In step S15, the control circuit 15 determines whether or not a timing has been reached at which the normal-playback video data should be output based on the timing output from the track counter 51 and the sync block counter 52, shown in Fig. 2, and the data written in the reading control register 53. When it is determined that a timing has been reached at which the normal-playback video data should be output, the process proceeds to step S16, whereby the data rate conversion circuit 17 outputs the normal-playback video data and the selection circuit 21 supplies the normal-playback video data supplied from the data rate conversion circuit 17 to the error-correcting-code generation circuit 22, and the process proceeds to step S17.

When it is determined in step S15 that a timing has not been reached at which the normal-playback video data should be output, since it is not necessary to output the normal-playback video data, step S16 is skipped, and the process proceeds to step S17.

In step S17, the control circuit 15 determines whether or not a timing has been reached at which the search video data should be output based on the timing output from the track counter 51 and the sync block counter 52, shown in Fig. 2, and the data written in the reading control register 53. When it is determined that a timing has been reached at which the search video data should be output, the process proceeds to step S18, whereby one of the ±4x speed buffer 18, the ±16x speed buffer 19, and the ±32x speed buffer 20 supplies the search video data, the error-correcting-code generation circuit 22 supplies the search video data, and the process proceeds to step S19.

When it is determined in step S17 that a timing has not been reached at which the search video data should be output, since it is not necessary to output the search video data, step S18 is skipped, and the process proceeds to step S19.

In step S19, the microcomputer 14 determines whether or not the recording should be terminated based on a signal supplied from an operation section (not shown). When it is determined that the recording should not be terminated, the process returns to step S12, whereby the recording process is repeated. When it is determined in step S19 that the recording should be terminated, the processing is terminated.

In the manner described above, the recording apparatus controls the bit rate of the normal-playback video picture in accordance with the type and the number of pieces of the search video data to be recorded in the magnetic tape 24. It is possible for the recording apparatus to record the search video data to which a macro block address is added, together with the normal-playback video data, in the magnetic tape 24.

Next, a description is given of a playback apparatus for reading normal-playback video data or normal-playback search video data recorded in the magnetic tape 24 and for playing back a video picture.

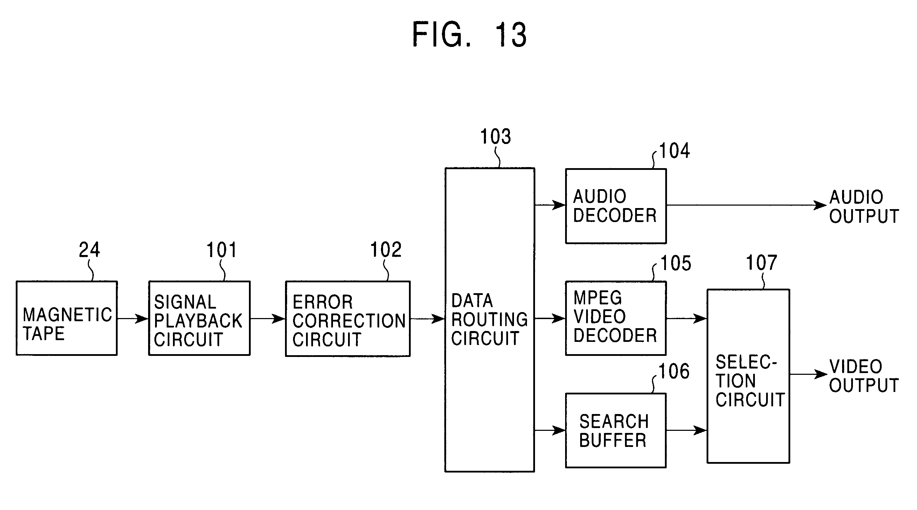

Fig. 13 shows the construction of an embodiment of a playback apparatus according to the present invention. A signal playback circuit 101, which is formed of a rotary head, etc., generates a signal corresponding to data recorded in the magnetic tape 24 and supplies it to an error correction circuit 102.

The error correction circuit 102 corrects an error of the signal generated by the signal playback circuit 101, and outputs it to a data routing circuit 103.

The data routing circuit 103 reads the SB header of the sync block based on the signal supplied from the error correction circuit 102, and based on the SB header, supplies the sync block to one of an audio decoder 104, an MPEG video decoder 105, and a search buffer 106.

The audio decoder 104 extracts audio data, which is a packetized elementary stream, from the sync block in which the audio data supplied from the data routing circuit 103 is stored, decodes the extracted audio data into an audio signal, and outputs it.

The MPEG video decoder 105 extracts video data, which is a packetized elementary stream, from the sync block in which video data of the normal-playback video picture supplied from the data routing circuit 103 is stored, decodes the extracted video data into a video signal, and outputs it to a selection circuit 107.

The search buffer 106, which has a frame memory, extracts normal-playback video data from the sync block in which search video data is stored, which is supplied from the data routing circuit 103, and decodes the extracted search video into search video data such that a predetermined number of bits is extracted from the DC components of the DCT block, after which, based on the MBA, the extracted search video data is written into the frame memory (a predetermined address corresponding to the MBA). The search buffer 106 reads the data stored in the frame memory in synchronization with the baseband video on the output side, and outputs it as a video signal to the selection circuit 107.

During a normal playback mode, the selection circuit 107 selects and outputs a video signal supplied from the MPEG video decoder 105, and during a search mode, outputs a video signal supplied from the search buffer 106.

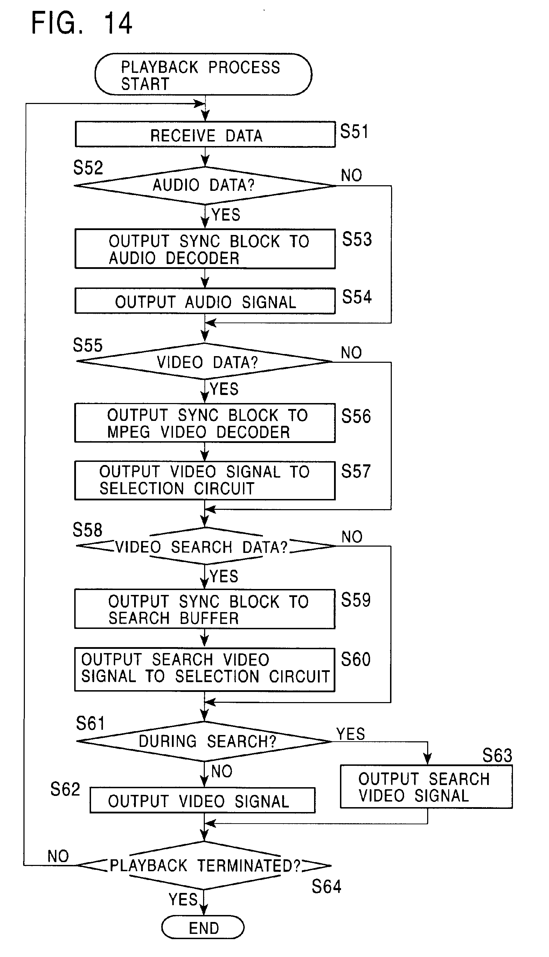

Next, referring to the flowchart in Fig. 14, an illustrative playback process of the playback apparatus according to an embodiment of the present invention is described.

In step S51, the data routing circuit 103 of the playback apparatus receives data supplied from the error correction circuit 102.

In step S52, the data routing circuit 103 reads the SB header of the sync block and determines whether or not the data contained in the sync block, which is the received data, is audio data (namely, whether or not bits b7 to b5 of the SB header is "1"). When it is determined that the data is audio data (namely, bits b7 to b5 of the SB header are "1"), the process proceeds to step S53, whereby the sync block is output to the audio decoder 104. In step S54, the audio decoder 104 extracts the audio data contained in the sync block supplied from the data routing circuit 103, decodes it, and outputs an audio signal.

When it is determined in step S52 that the data is not audio data, step S53 and S54 are skipped, and the process proceeds to step S55.

In step 555, the data routing circuit 103 reads the SB header of the sync block and determines whether or not the data contained in the sync block, which is the received data, is video data of a normal-playback video picture (namely, whether or not bits b7 to b5 of the SB header are "0"). When it is determined that the data is video data of a normal-playback video picture (namely, bits b7 to b5 of the SB header are "0"), the process proceeds to step S56, whereby the sync block is output to the MPEG video decoder 105. In step S57, the MPEG video decoder 105 extracts the video data contained in the sync block supplied from the data routing circuit 103, decodes it, and outputs a video signal to the selection circuit 107.

When it is determined in step S55 that the data is not video data, step S56 and S57 are skipped, and the process proceeds to step S58.

In step S58, the data routing circuit 103 reads the SB header of the sync block and determines whether or not the data contained in the sync block, which is the received data, is search video data (namely, whether or not bits b7 to b5 of the SB header are "2"). When it is determined that the data is normal-playback video data (namely, bits b7 to b5 of the SB header are "2"), the process proceeds to step S59, whereby the sync block is output to the search buffer 106. In step S60, the search buffer 106 extracts the search video data contained in the sync block supplied from the data routing circuit 103, decodes the search video data, combines them so that they become one image, and outputs a search video signal to the selection circuit 107.

When it is determined in step S58 that the data is not search video data, step S59 and S60 are skipped, and the process proceeds to step S61.

In step S61, the selection circuit 107 determines whether or not searching is being performed. When it is determined that searching is not being performed, the process proceeds to step S62, whereby the video signal of the normal-playback video picture supplied from the MPEG video decoder 105 is output, and the process proceeds to step S64.

When it is determined in step S61 that searching is being performed, the process proceeds to step S63, whereby the selection circuit 107 outputs the search video signal supplied from the search buffer 106, and the process proceeds to step S64.

In step S64, the playback apparatus determines whether or not the playback should be terminated based on an operation performed on an operation section (not shown), and so on. When it is determined that the playback should not be terminated, the process proceeds to step S51, whereby the playback process is repeated. When it is determined in step S64 that the playback should be terminated, the processing is terminated.

In the manner described above, during the search mode, the playback apparatus can output a search video signal based on the search video data recorded in the magnetic tape 24.

The recording apparatus may decrease the bit rate of normal-playback video data in order to record auxiliary data or audio data (for example, audio data corresponding to an increased recording channel) instead of search video data, and the playback apparatus may read or decode auxiliary data or audio data.

Although the above-described series of processing can be performed by hardware, it can also be performed by software. In a case where the series of processing is to be performed by software, programs which form the software are installed from a program recording medium into a computer incorporated into dedicated hardware or into, for example, a general-purpose personal computer capable of executing various types of functions by installing various programs.

This recording medium, as shown in Fig. 1, is constructed by not only packaged media formed of a magnetic disk 31 (including a floppy disk), an optical disk 32 (including a CD-ROM (Compact Disc-Read Only Memory) and a DVD (Digital Versatile Disc)), a magneto-optical disk 33 (including an MD (Mini-Disc)), or a semiconductor memory 34, in which programs are recorded, which packaged media are distributed to provide programs to a user separately from the computer, but also is constructed by a ROM (for example, provided within the microcomputer 14) in which programs are recorded, and a hard disk contained in the storage section.

In this specification, steps which describe a program stored in a recording medium contain not only processing performed in a time-series manner along the described sequence, but also processing performed in parallel or individually although the processing is not necessarily performed in a time-series manner.

Furthermore, in this specification, the system represents the overall apparatus composed of a plurality of devices.

According to the magnetic tape recording apparatus, the magnetic tape recording method, and the recording medium of an embodiment of the present invention, an input video picture is coded to create video data, search data is created based on the video data, and formatting is performed so that the video data and the search data are stored in tracks of a magnetic tape. In one track, a predetermined number of sync blocks is placed continuously, and in one sync block, a detection pattern for detecting a sync block, identification information for identifying the sync block, main data, and an error correcting intra code for the identification information and the main data are placed. When the sync block stores the search data, the address corresponding to the stored search data on the display picture is placed in the main data of the sync block. Consequently, it is possible to freely control the ratio of the video data to the search data so that these are recorded.

Furthermore, according to the magnetic tape playback apparatus, the magnetic tape playback method, and the recording medium of an embodiment of the present invention, the address of the search data on the picture to be displayed is extracted from read digital data, the search data is combined as a result of being placed at a predetermined position on the basis of the extracted address, and the combined search data is output as one image. Consequently, it is possible to use the search data and the video data, the ratio of which is controlled.

According to the format of the magnetic tape of an embodiment of the present invention, a predetermined number of sync blocks is placed in one track, and in one sync block, a detection pattern for detecting a sync block, identification information for identifying the sync block, main data, and an error correcting intra code for the identification information and the main data are placed. When the sync block stores the search data, the address corresponding to the stored search data on the display picture is placed in the main data of the sync block. Consequently, it is possible to freely control the ratio of the video data to the search data so that these are recorded.

Many different embodiments of the present invention may be constructed without departing from the spirit and scope of the present invention. It should be understood that the present invention is not limited to the specific embodiments described in this specification. To the contrary, the present invention is intended to cover various modifications and equivalent arrangements included within the spirit and scope of the invention. The scope of the following claims is to be accorded the broadest interpretation so as to encompass all such modifications, equivalent structures and functions.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A magnetic tape recording apparatus for recording digital data in tracks of a magnetic tape by a rotary head, said magnetic tape recording apparatus comprising:
video data creation means for coding an input video picture in order to create video data;
search data creation means for creating search data on the basis of said video data; and
formatting means for performing formatting so that said video data and said search data are stored in said tracks of said magnetic tape,
wherein said formatting means places a predetermined number of sync blocks in one of said tracks, places, in one of said sync blocks, a detection pattern for detecting a sync block, identification information for identifying said sync block, main data, and an error-correcting intra code for said identification information and said main data, and places the address corresponding to said stored search data on the display picture, in said main data of said sync block when said sync block stores said search data.

2. A magnetic tape recording apparatus according to Claim 1, further comprising bit rate control means for controlling the bit rate of said video data output by said video data creation means. video data creation means.

3. A magnetic tape recording apparatus according to Claim 1, further comprising bit rate control means for controlling the bit rate of said search data output by said search data creation means.

4. A magnetic tape recording apparatus according to Claim 1, further comprising signal generation means for generating a signal for indicating the position at which said search data is stored in said track of said magnetic tape,
wherein said formatting means performs formatting so that said search data is stored at the position of said track of said magnetic tape, which corresponds to said signal.

5. A magnetic tape recording method for recording digital data in tracks of a magnetic tape by a rotary head, said magnetic tape recording method comprising the steps of:
coding an input video picture in order to create video data;
creating search data on the basis of said video data; and
performing formatting so that said video data and said search data are stored in said tracks of said magnetic tape,
wherein the process of said formatting step places a predetermined number of sync blocks in one of said tracks, places, in one of said sync blocks, a detection pattern for detecting a sync block, identification information for identifying said sync block, main data, and an error-correcting intra code for said identification information and said main data, and places the address corresponding to said stored search data on the display picture, in said main data of said sync block when said sync block stores said search data.

6. A recording medium having recorded therein a computer-readable program for use with a magnetic tape recording process for recording digital data in tracks of a magnetic tape by a rotary head, said program comprising the steps of:
coding an input video picture in order to create video data;
creating search data on the basis of said video data; and
performing formatting so that said video data and said search data are stored in said tracks of said magnetic tape,
wherein the process of said formatting step places a predetermined number of sync blocks in one of said tracks, places, in one of said sync blocks, a detection pattern for detecting a sync block, identification information for identifying said sync block, main data, and an error-correcting intra code for said identification information and said main data, and places the address corresponding to said stored search data on the display picture, in said main data of said sync block when said sync block stores said search data.

7. A magnetic tape playback apparatus for reading, by a rotary head, digital data containing the address of search data on the display picture, which is recorded in a magnetic tape, said magnetic tape playback apparatus comprising:
extraction means for extracting said address of said search data on the display picture from said read digital data;
combining means for performing combining by placing said search data at a predetermined position on the basis of said extracted address; and
output means for outputting said search data combined by said combining means as one image.

8. A magnetic tape playback method for use with a magnetic tape playback apparatus for reading, by a rotary head, digital data containing the address of search data on the display picture, which is recorded in a magnetic tape, said magnetic tape playback method comprising the steps of:
extracting said address of said search data on the display picture from said read digital data;
performing combining by placing said search data at a predetermined position on the basis of said extracted address; and
controlling the output so that said search data combined in said combining step is output as one image.

9. A recording medium having recorded therein a computer-readable program for use with a playback process for reading, by a rotary head, digital data containing the address of search data on the display picture, which is recorded in a magnetic tape, said program comprising the steps of:
extracting said address of said search data on the display picture from said read digital data;
performing combining by placing said search data at a predetermined position on the basis of said extracted address; and
controlling the output so that said search data combined in said combining step is output as one image.

10. A format of a magnetic tape in which digital data is recorded in tracks by a rotary head, wherein in one of said tracks, a predetermined number of sync blocks is placed continuously; in one of said tracks, a detection pattern for detecting a sync block, identification information for identifying said sync block, main data, and an error-correcting intra code for said identification information and said main data are placed; and when said sync block stores said search data, the address corresponding to said search data on the display picture is placed in said main data of said sync block.
